# DEMANDE DE BREVET EUROPEEN

(11) **EP 4 528 870 A1**
(43) Date de publication de la demande: **26.03.2025**
(21) Numéro de dépôt: 24201964.4
(22) Date de dépôt: 23.09.2024
(51) Int. Cl.: H01M 10/0525, H01M 10/0565

(54) **ÉLECTROLYTE POLYMÈRE POUR BATTERIE TOUT SOLIDE**

(30) Priorité: 22.09.2023 FR 2310076
(71) Demandeur: Ampere SAS, 92100 Boulogne-Billancourt (FR); Centre National de la Recherche Scientifique, 75016 Paris (FR); Université Amiens Picardie Jules Verne, 80000 Amiens (FR)
(72) Inventeur: BECUWE, Matthieu, 80000 Amiens (FR); BESNARD, Nicolas, 78084 Guyancourt (FR); GRUGEON, Sylvie, 80000 Amiens (FR); PIGNIER, Vincent, 80000 Amiens (FR); SICSIC, David, 78084 Guyancourt (FR); SON, Junghan, 78084 Guyancourt (FR)
(74) Mandataire: Renault Group

(57) **Abrégé**

La présente invention concerne un électrolyte polymère comprenant :
a) au moins un polymère comprenant au moins un motif obtenu à partir d'une réaction d'au moins un monomère styrénique avec au moins un polymère P choisi parmi les polyéthers ;
b) au moins un polyéther cyclique ; et
c) au moins un sel électrolyte.

## Description

### Domaine technique

La présente invention concerne le domaine des batteries tout solide.

Plus particulièrement, la présente invention concerne un électrolyte polymère ainsi qu'un procédé de préparation dudit électrolyte polymère. L'invention porte également sur une cellule de batterie tout solide comprenant ledit électrolyte polymère, ainsi qu'une batterie tout solide comprenant ladite cellule.

### Techniques antérieures

De manière classique, les batteries tout solide comprennent une ou plusieurs électrodes positives, une ou plusieurs électrodes négatives, un électrolyte solide formant un séparateur, un collecteur de courant anodique et un collecteur de courant cathodique.

Les performances d'une batterie sont tributaires des propriétés de transports ionique et électronique. Dans le cas d'une batterie tout solide, le transport ionique à l'échelle de l'électrode se fait à travers le réseau formé par l'électrolyte solide qui forme des chemins de conduction ionique à travers tout le volume de l'électrode pour le transport des ions vers ou depuis l'ensemble des particules de matériau actif.

Les batteries tout solide utilisent différents types de matériaux d'électrolytes solides. En particulier, il existe deux grandes branches dans le domaine des électrolytes solides (ou à l'état solide) : les céramiques (ou électrolytes inorganiques) et les électrolytes polymère solides, pouvant être appelés EPS.

En règle générale, les céramiques présentent une conductivité ionique et une fenêtre de stabilité électrochimique supérieures, mais leur stabilité chimique et leurs propriétés mécaniques sont médiocres. D'autre part, l'électrolyte polymère solide présente une stabilité chimique et des propriétés mécaniques supérieures, mais le principal problème est la faible conductivité ionique à température ambiante.

Afin d'améliorer la conductivité ionique des électrolytes polymères solides, il est connu d'ajouter un électrolyte liquide ou un plastifiant à la matrice polymère.

Toutefois, cette approche présente d'importants inconvénients. L'électrolyte liquide et le plastifiant sont volatils et peuvent subir des réactions secondaires, en particulier à des températures élevées, environ plus de 50°C, ce qui entraîne une réduction des performances de la batterie et un gonflement des cellules électrochimiques. Il en résulte une diminution de la stabilité de l'électrolyte.

Il existe donc un besoin de développer un nouvel électrolyte polymère pour batterie tout solide permettant de surmonter les inconvénients ci-dessus.

### Exposé de l'invention

L'invention a donc pour objet un électrolyte polymère comprenant :
a) au moins un polymère comprenant au moins un motif obtenu à partir d'une réaction d'au moins un monomère styrénique avec au moins un polymère P choisi parmi les polyéthers ;
b) au moins un polyéther cyclique ; et
c) au moins un sel électrolyte.

Grâce à l'électrolyte polymère selon l'invention, des performances améliorées sont obtenues, notamment une meilleure conductivité ionique à température ambiante sans affecter les propriétés de stabilité thermique, chimique et électrochimique de l'électrolyte.

L'invention a également pour objet un procédé de préparation d'un électrolyte polymère comme décrit précédemment, le procédé comprenant les étapes suivantes :
i) mettre en contact au moins ledit monomère styrénique avec au moins ledit polymère P;
ii) polymériser le produit obtenu à l'issue de l'étape i), ledit polyéther cyclique étant ajouté avant ou après l'étape ii) ; et
iii) récupérer l'électrolyte polymère ;
ledit sel électrolyte étant ajouté durant l'étape ii) et/ou après l'étape ii).

Un autre objet de l'invention est une cellule de batterie tout solide comprenant l'électrolyte polymère solide selon l'invention, ainsi qu'une batterie tout solide comprenant la cellule selon l'invention.

D'autres avantages et caractéristiques de l'invention apparaîtront plus clairement à l'examen de la description détaillée et des dessins annexés sur lesquels :
[Fig 1] représente l'évolution de la conductivité ionique en fonction de la température d'un électrolyte polymère selon l'invention, et de deux électrolytes polymères solides comparatifs.
[Fig 2] est une courbe d'analyse thermogravimétrique caractérisant la stabilité thermique d'un électrolyte polymère selon l'invention.
[Fig 3] représente l'évolution de la capacité en fonction de cycles de charge-décharge de demi-cellules électrochimiques comportant un électrolyte polymère selon l'invention et un électrolyte de référence.

L'expression « compris entre... et... » utilisée dans la présente description de l'invention doit s'entendre comme incluant chacune des bornes mentionnées.

De plus, l'expression « au moins un » utilisée doit être considérée équivalente à l'expression « un ou plusieurs ».

On entend au sens de la présente invention par « monomère styrénique » un monomère présentant au moins la structure chimique du styrène.

Comme indiqué ci-avant, l'électrolyte polymère solide selon l'invention comprend a) au moins un polymère comprenant au moins un motif obtenu à partir d'une réaction d'au moins un monomère styrénique avec au moins un polymère P choisi parmi les polyéthers.

Avantageusement, les polyéthers utilisables pour le polymère P peuvent être les poly(oxyde d'alkylène), tels que le poly(oxyde d'éthylène), le poly(oxyde de propylène), etc., les polyéthers cycliques, tels que le dioxane, l'éther 9-couronne-3, l'éther 12-couronne-4, l'éther 15-couronne-5, l'éther 18-couronne-6, etc., et leurs copolymères ou leur mélange.

Selon un mode de réalisation préféré, ledit polymère P est choisi parmi le polyoxyméthylène, le poly(oxyde d'éthylène), le poly(oxyde de propylène), leurs copolymères et leur mélange, de préférence le polymère P est le poly(oxyde d' éthylène).

Dans un mode de réalisation, le polymère P peut comprendre un groupement copolymère comportant au moins deux polyéthers de nature différente.

Par exemple, le polymère P peut comprendre un groupement copolymère à bloc poly(oxyde d'éthylène)-poly(oxyde de propylène).

Avantageusement, ledit monomère styrénique est choisi parmi le styrène, l'o-méthylstyrène, le p-méthylstyrène, le 2,4-diméthylstyrène, le m-chlorostyrène, le p-chlorostyrène, le vinylanisole, le sulfonate de styrène et leurs mélanges, de préférence choisi parmi le styrène et le sulfonate de styrène.

De préférence, le ratio en poids entre le polymère P et le monomère styrénique va de 0,6 à 9, de préférence de 0,95 à 7,5, plus préférentiellement de 1,3 à 6,5.

Avantageusement, le polymère a) peut comprendre une masse molaire en poids ou poids moléculaire allant de 150 à 2000 g/mol, de préférence de 200 à 700 g/mol, plus préférentiellement de 300 à 450 g/mol.

De préférence, ledit polymère a) est présent en une teneur allant de 20 à 85 % en poids, de préférence de 40 à 60 % en poids par rapport au poids total de l'électrolyte polymère.

Avantageusement, la teneur totale en monomère styrénique peut aller de 10 à 60% en poids, de préférence de 12 à 51% en poids, plus préférentiellement de 14 à 35% en poids, encore plus préférentiellement de 18 à 33% en poids par rapport au poids total du polymère a).

Avantageusement, la teneur totale en polymère P peut aller de 40 à 90% en poids, de préférence de 49 à 88% en poids, plus préférentiellement de 65 à 86% en poids, encore plus préférentiellement de 67 à 82% en poids par rapport au poids total du polymère a).

L'électrolyte polymère selon l'invention comprend en outre b) au moins un polyéther cyclique.

Avantageusement, ledit polyéther cyclique peut comprendre un composé choisi parmi : le dioxane, l'éther 9-couronne-3, l'éther 12-couronne-4, l'éther 15-couronne-5, l'éther 18-couronne-6 ou un mélange de ceux-ci.

De préférence, ledit polyéther cyclique est présent en une teneur allant de 5 à 50% en poids, de préférence de 10 à 30 % en poids par rapport au poids total de l'électrolyte polymère.

Dans un mode de réalisation préféré, ledit motif est de formule (I) suivante : 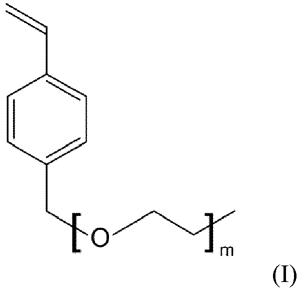 où m va de 3 à 45, de préférence de 5 à 14.

Dans un autre mode de réalisation préféré, ledit motif est de formule (II) suivante : 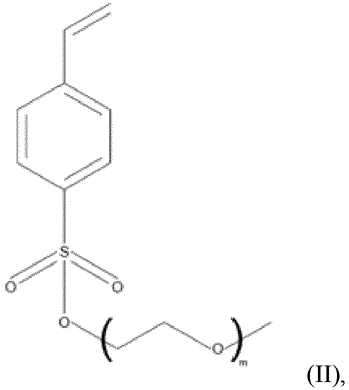 où m va de 3 à 68, de préférence de 3 à 23.

L'électrolyte polymère solide selon l'invention comprend en outre c) au moins un sel électrolyte.

Avantageusement, ledit sel électrolyte est choisi parmi les sels de métaux alcalino-terreux, les sels de métaux alcalins et leurs mélanges, de préférence parmi les sels de métaux alcalins, plus préférentiellement parmi les sels de sodium, les sels de lithium et leurs mélanges.

Parmi les sels de sodium utilisables selon l'invention, il peut être fait mention de NaCF₃SO₃, NaSCN, NaBF₄, NaN(CF₃SO₃)₂, ou encore NaClO₄.

Encore plus préférentiellement, ledit sel électrolyte est choisi parmi les sels de lithium.

Parmi les sels de lithium utilisables selon l'invention, il peut être fait mention, outre ceux cités ci-dessous, des sels de lithium polyanions, comme par exemple le sel de lithium polystyrène sulfonate.

Avantageusement, ledit sel électrolyte est choisi parmi LiPF₆, LiFSI, LiTFSI, LiClO₄, LiAsF₆, LiBF₄, LiI, LiN(CF₃SO₂)₂, LiCF₃SO₃, LiN(CF₃CF₂SO₂)₂, LiCH₃SO₃, LiN(CF₃SO₂)(CF₂HSO₂), LiN(RFSO₂)₂, LiC(RFSO₂)₃, RF étant un groupement choisi parmi un atome de fluor et un groupement perfluoroalkyle comportant de un à huit atomes de carbone.

De préférence, ledit sel électrolyte est le bis(trifluorométhanesulfonyl)imide de lithium (LiN(CF₃SO₂)₂).

De préférence, le sel électrolyte est présent en une teneur allant de 10 à 50% en poids, de préférence de 10 à 30% en poids par rapport au poids total de l'électrolyte polymère.

La présente invention a également pour objet un procédé de préparation d'un électrolyte polymère selon l'invention et tel que mentionné ci-avant.

Ledit procédé de préparation comprend les étapes suivantes :
i) mettre en contact au moins ledit monomère styrénique avec au moins ledit polymère P;
ii) polymériser le produit obtenu à l'issue de l'étape i), ledit polyéther cyclique étant ajouté avant ou après l'étape ii) ; et
iii) récupérer l'électrolyte polymère ;
ledit sel électrolyte étant ajouté durant l'étape ii) et/ou après l'étape ii).

Ainsi, le sel électrolyte peut être ajouté soit durant l'étape (ii) de polymérisation, soit après l'étape (ii), soit durant l'étape (ii) et après l'étape (ii).

De préférence, le sel électrolyte est ajouté durant l'étape ii).

De préférence, le polyéther cyclique est ajouté après l'étape ii) de polymérisation.

L'étape i) peut se dérouler pendant une période allant de 1 heure à 72 heures, de préférence de 5 à 60 heures, plus préférentiellement de 8 à 36 heures.

L'étape i) peut se dérouler en présence d'un solvant, tel que par exemple de l'acétonitrile ou du THF.

L'étape i) peut se dérouler à une température allant de la température ambiante à 40°C, de préférence à température ambiante. La température ambiante est une température allant de 20 à 25°C.

Un solvant peut être présent lors de l'étape ii), tel que l'éthanol ou le THF.

L'étape iii) de récupération dudit électrolyte polymère solide peut être réalisée par évaporation du solvant éventuellement présent, suivi d'un séchage, par exemple à 80°C pendant une période pouvant être de 24 heures.

Dans un mode de réalisation, à l'étape ii), le produit obtenu à l'issu de l'étape i) peut être chauffé en présence d'un initiateur de radicaux libres, de préférence un initiateur azoïque, afin de réaliser une polymérisation par radicaux libres.

Le chauffage de l'étape ii) peut être réalisé à une température allant de 40 à 110°C, de préférence allant de 60 à 90°C, plus préférentiellement allant de 75 à 85°C.

De préférence, le chauffage se déroule pendant une période allant de 1 heure à 15 heures, de préférence de 3 à 10 heures, plus préférentiellement de 4 à 8 heures.

Avantageusement, l'initiateur azoïque de radicaux libres peut être choisi parmi : azobisisobutyronitrile (AIBN), 1,1'-Azobis(cyclohexanecarbonitrile), 2,2'-Azobis(2-methylbutyronitrile), 4,4'-Azobis(4-acide cyanovalérique), 2,2'-Azobis(2,4-dimethylvaleronitrile) ou un mélange de ceux-ci.

L'invention a également pour objet une cellule de batterie tout solide comprenant au moins un électrolyte polymère selon l'invention tel que défini ci-avant.

Un autre objet de la présente invention est une batterie tout solide comprenant au moins une cellule telle que définie ci-avant.

La présente invention est illustrée de manière non-limitative par les exemples suivants.

### Exemples

### Exemple 1 : Formation de 4-vinylbenzyl methoxynona(ethylene glycol) ether

1 équivalent molaire (Eq) de monométhoxy polyéthylène glycol, présentant une masse moléculaire en poids de 750 g/mol a été dissous dans du tétrahydrofurane (THF) sec, puis la solution a été chauffée à 40°C. Le ratio entre le polymère et le THF est de 10 mL de THF pour 1 g de monométhoxy polyéthylène glycol.

1,5 Eq de NaH a ensuite lentement été ajouté au mélange sous agitation vigoureuse puis le mélange a été agité pendant 3 heures à 40°C et sous une atmosphère d'argon, jusqu'à ce que sa couleur devienne marron.

1,5 Eq. de 4-vinylbenzyl chloride a alors été ajouté au goutte à goutte à l'aide d'une seringue. NaCl a précipité immédiatement et le mélange a été agité vigoureusement pendant 24h.

Le mélange a ensuite été filtré puis le THF retiré. Après évaporation du THF, la solution obtenue était jaune et visqueuse. Le produit brut obtenu a été purifié plusieurs fois par plusieurs lavages à l'eau et au n-hexane. La solution aqueuse a été recueillie puis l'eau qu'elle contenait a été retirée à l'aide d'un évaporateur rotatif, sous vide et à 60°.

La solution résultante a été dissous dans du toluène afin de retirer toute trace d'eau par distillation azéotropique, puis le toluène a été retiré à l'aide d'un évaporateur rotatif. Le liquide résultant a été dissous dans du dichlorométhane (DCM) puis séché avec du sulfate de magnésium.

Après avoir retiré le DCM à l'aide d'un évaporateur rotatif sous vide à 40°C, le 4-vinylbenzyl methoxynona(ethylene glycol) ether, prenant la forme d'un liquide jaune clair transparent, a été obtenu et sa pureté a été déterminée par spectroscopie RMN.

### Exemple 2 : Préparation d'un électrolyte polymère selon un premier mode de réalisation de l'invention

56,2 % en poids de 4-vinylbenzyl methoxynona(ethylene glycol) ether préparé à l'exemple 1, 10,1 % en poids de sel de lithium LiTFSI, 1,97 % en poids d'initiateur azoïque AIBN et 31,8 % en poids d'éther couronne 18C6 ont été dissous dans une faible quantité de DCM.

La solution a été versée sur une feuille de Téflon puis stockée dans un endroit sec durant 1 à 2 heures, jusqu'à évaporation du DCM.

La solution a ensuite été chauffée à 65°C pendant 6 heures, puis a été séchée sous un vide poussé à 80°C toute une nuit afin de retirer toutes les molécules d'eau résiduelles éventuelles.

Un électrolyte polymère quasi-solide selon l'invention a été obtenu.

Dans ce premier mode de réalisation, l'éther couronne 18C6 est ajouté avant polymérisation.

### Exemple 3 : préparation d'un électrolyte polymère selon un deuxième mode de réalisation de l'invention

L'exemple 3 diffère de l'exemple 2 en ce que l'éther couronne 18C6 est ajouté après polymérisation.

Le 4-vinylbenzyl methoxynona(ethylene glycol) ether préparé à l'exemple 1, le sel de lithium LiTFSI, et l'initiateur azoïque AIBN ont donc été dissous dans une faible quantité de DCM.

La solution a été versée sur une feuille de Téflon puis stockée dans un endroit sec durant 1 à 2 heures, jusqu'à évaporation du DCM.

L'électrolyte polymère solide obtenu a ensuite été chauffée à 65°C pendant 6h.

L'éther couronne 18C6 a été dissous dans du THF puis ajouté au goutte à goutte à l'électrolyte polymère solide.

Le produit obtenu a été stocké 24h jusqu'à l'obtention d'un système homogène, puis un électrolyte polymère quasi-solide, ou gel, selon l'invention a été obtenu.

Dans ce deuxième mode de réalisation, l'éther couronne 18C6 est ajouté après polymérisation.

### Evaluation des performances

### a. Conductivité ionique

La conductivité ionique des échantillons a été mesurée par spectroscopie d'impédance AC.

Un électrolyte polymère en forme de pastille a été préparé en utilisant un poinçon de 10 mm de diamètre. La pastille a été placée entre deux feuilles de graphite flexibles (PAPYEX^{®}, Mersen), formant deux électrodes de blocage.

L'échantillon a été placé dans un support d'échantillon à environnement contrôlé (CESH, Biologie) pour maintenir une atmosphère de gaz inerte. La température était contrôlée par un système de température intermédiaire (ITS, BioLogic).

Le spectre d'impédance AC a été enregistré par un analyseur de réponse en fréquence MTZ-35 (BioLogic) dans une plage de température de -10°C à 80°C.

Les échantillons sont préchauffés à 80°C pendant une heure avant la mesure. La température a ensuite été augmentée lentement (1K/min) jusqu'à la température définie puis maintenue pendant 30 minutes avant qu'une perturbation de tension sinusoïdale de 50 mV soit appliquée entre 10⁷ et 0,05 Hz.

L'électrolyte polymère selon l'invention tel qu'obtenu à l'exemple 2 est utilisé, et appelé EP1.

Un électrolyte polymère solide comprenant le polymère de référence utilisé à dans l'exemple 2, sans ajout d'éther couronne 18C6, a été utilisé. Il est appelé EP2 dans la suite.

Un électrolyte polymère comprenant du poly(oxyde d'éthylène) et du sel de lithium LiTFSI selon un ratio molaire (Li :OE (oxyde d'éthylène) = 1 : 20), a été utilisé. Il est appelé EP3 dans la suite.

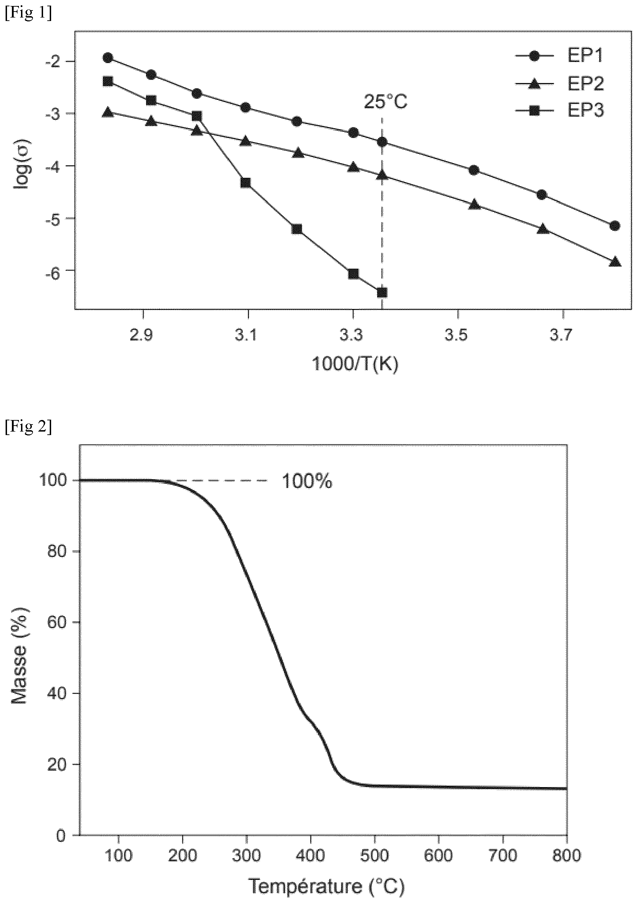

L'évolution de la conductivité ionique en fonction de la température des électrolytes polymère EP1, EP2 et EP3 peut être observée sur la figure 1.

Ainsi, il apparaît clairement que l'électrolyte EP1 selon l'invention présente une meilleure conductivité ionique que celle des électrolytes EP2 et EP3 dans la gamme de température considérée, notamment à température ambiante, 25°C, et à 80°C. Pour l'électrolyte polymère EP1 selon l'invention, une valeur de conductivité ionique de 2.9×10⁻⁴ S/cm a été obtenue à température ambiante, 25°C, et de 1.2×10⁻² S/cm à 80°C, par addition de l'éther couronne 18C6.

Cela représente une avancée significative pour les batteries tout solide dont le principal problème reste la faible conductivité ionique à température ambiante.

L'électrolyte polymère solide selon l'invention est donc un candidat à haut potentiel pour une application au sein d'une batterie tout solide.

### b. Stabilité thermique

Afin d'étudier la perte de masse de l'électrolyte polymère EP1 sous l'influence de la chaleur, une analyse thermogravimétrique a été réalisée entre la température ambiante et 800°C avec une rampe de température appliquée de 10 K/min.

Bien que le point d'ébullition de l'éther couronne 18C6 soit relativement bas (116°C), aucune perte de masse n'a été observée avant la décomposition du polymère.

Ceci montre que l'électrolyte polymère solide selon l'invention possède une importante stabilité thermique jusqu'à 180°C.

L'électrolyte polymère solide selon l'invention est donc un candidat prometteur pour améliorer la durée de vie de la batterie. De plus, il peut être intégré dans une batterie nécessitant de fonctionner à des températures élevées.

### c. Test de stabilité interfaciale avec Li métal

Une cellule électrochimique au lithium a été préparée afin de tester la stabilité interfaciale de l'électrolyte polymère EP1 selon l'invention obtenu à l'exemple 2, face au Li métal durant le cyclage.

L'électrolyte polymère EP1 est intercalé entre deux feuilles métalliques de Li.

Une cellule comparative a été réalisée avec du Li6PS5Cl, et un électrolyte céramique présentant une haute conductivité ionique mais une stabilité interfaciale réduite et sujet à la formation de dendrites au contact de Li métal durant le cyclage.

Il a été observé que l'électrolyte polymère EP1 selon l'invention possède des propriétés de stabilité élevées face au lithium métal, et notamment en comparaison du Li6PS5Cl. De plus, aucun court-circuit n'a observé durant le cyclage en présence de l'électrolyte polymère EP1 selon l'invention.

La stabilité de l'électrolyte polymère solide selon l'invention face au lithium métal en fait un candidat prometteur pour son intégration dans des batteries au lithium.

### d) Préparation de demi-cellules électrochimiques de type Swagelok

Une solution A d'électrolyte selon l'invention, avant polymérisation, a été préparée en mettant en contact 56,2 % en poids de 4-vinylbenzyl methoxynona(ethylene glycol) ether préparé à l'exemple 1, 10,1 % en poids de sel de lithium LiTFSI, 1,97 % en poids d'initiateur azoïque AIBN et 31,8 % en poids d'éther couronne 18C6, sans solvant.

Une première demi-cellule C1 a été préparée à partir d'un matériau de cathode organique à base de pérylène-diimide (PDI), mélangé à du carbone conducteur selon un ratio Matériau de cathode : Carbone conducteur égal à 7 : 3, et la solution A d'électrolyte selon l'invention, avant polymérisation, préparée ci-dessus.

Une deuxième demi-cellule C2 a été préparée à partir d'un matériau de cathode organique à base de pérylène-diimide (PDI), mélangé à du carbone conducteur selon un ratio matériau de cathode : carbone conducteur égal à 5 : 5, et la solution A d'électrolyte selon l'invention, avant polymérisation, préparée ci-dessus.

Une troisième demi-cellule C3 de référence a été préparée à partir d'un matériau de cathode organique à base de pérylène-diimide (PDI), mélangé à du carbone conducteur selon un ratio matériau de cathode : carbone conducteur égal à 7 : 3, et d'une solution B d'électrolyte organique de référence LP30, à base d'EC, DMC et LiPF6.

Les matériaux de la cathode ont été placés sous forme de poudre dans une demi-cellule de type Swagelok et un séparateur en fibre de verre agissant comme une barrière physique a été placé dans la demi-cellule, avant polymérisation.

Les poudres de la cathode et le séparateur ont ensuite été imprégnés de la solution A d'électrolyte pour les demi-cellules C1 et C2 et de la solution B d'électrolyte pour la demi-cellule C3.

Un disque métallique de lithium a été placé dans les demi-cellules C1, C2 et C3 qui ont ensuite été refermées hermétiquement.

La polymérisation qui s'opère in situ a été réalisée en plaçant les demi-cellules C1 et C2 à 80°C pendant 24 heures jusqu'à polymérisation complète et stabilisation du système électrolyte. La polymérisation de la demi-cellule de référence C3 a été effectuée pendant 24 heures à température ambiante.

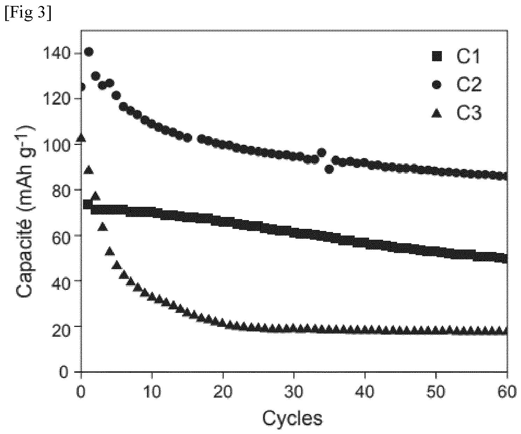

En référence à la figure 3, des cycles de charge-décharge ont été réalisés sur les demi-cellules C1, C2 et C3 à 80°C et à température ambiante, 25°C.

Contrairement à la demi-cellule C3 de référence les demi-cellules C1 et C2 montre un bon fonctionnement et une stabilité remarquable à 80°C. Une rétention de capacité exceptionnelle a été constatée avec l'électrolyte polymère selon l'invention, notamment par rapport à l'électrolyte liquide de référence.

## Revendications

1. Electrolyte polymère comprenant :
a) au moins un polymère comprenant au moins un motif obtenu à partir d'une réaction d'au moins un monomère styrénique avec au moins un polymère P choisi parmi les polyéthers ;
b) au moins un polyéther cyclique ; et
c) au moins un sel électrolyte.

2. Electrolyte selon la revendication 1, dans lequel ledit polyéther cyclique comprend un composé choisi parmi : le dioxane, l'éther 9-couronne-3, l'éther 12-couronne-4, l'éther 15-couronne-5, l'éther 18-couronne-6 ou un mélange de ceux-ci.

3. Electrolyte selon la revendication 1 ou 2, dans lequel ledit polymère P est choisi parmi les poly(oxyde d'alkylène), tels que le polyoxyméthylène, le poly(oxyde d'éthylène), le poly(oxyde de propylène), les polyéthers cycliques, tels que le dioxane, l'éther 9-couronne-3, l'éther 12-couronne-4, l'éther 15-couronne-5, l'éther 18-couronne-6, et leurs copolymères ou leur mélange.

4. Electrolyte selon l'une quelconque des revendications précédentes, dans lequel ledit monomère styrénique est choisi parmi le styrène, l'o-méthylstyrène, le p-méthylstyrène, le 2,4-diméthylstyrène, le m-chlorostyrène, le p-chlorostyrène, le vinylanisole, le sulfonate de styrène et leurs mélanges, de préférence choisi parmi le styrène et le sulfonate de styrène.

5. Electrolyte selon l'une quelconque des revendications précédentes, dans lequel ledit motif est de formule (I) suivante : 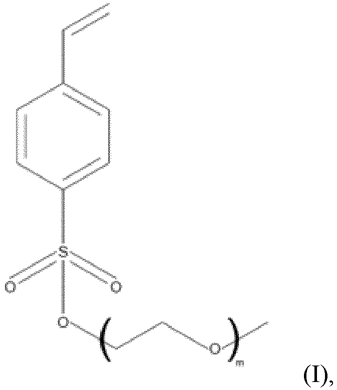 où m va de 3 à 68, de préférence de 3 à 23.

6. Electrolyte selon l'une quelconque des revendications 1 à 4, dans lequel ledit motif est de formule (I) suivante : 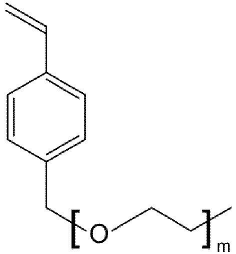 où m va de 3 à 45, de préférence de 5 à 14.

7. Procédé de préparation d'un électrolyte polymère selon l'une quelconque des revendications précédentes, **caractérisé en ce qu'**il comprend les étapes suivantes :
i) mettre en contact au moins ledit monomère styrénique avec au moins ledit polymère P;
ii) polymériser le produit obtenu à l'issue de l'étape i), ledit polyéther cyclique étant ajouté avant ou après l'étape ii) ; et
iii) récupérer l'électrolyte polymère ; ledit sel électrolyte étant ajouté durant l'étape ii) et/ou après l'étape ii).

8. Procédé de préparation selon la revendication 7, dans lequel à l'étape ii), le produit obtenu à l'issu de l'étape i) est chauffé en présence d'un initiateur de radicaux libres, de préférence un initiateur azoïque, le chauffage étant réalisé à une température allant de 40 à 110°C, de préférence allant de 60 à 90°C, plus préférentiellement allant de 75 à 85°C.

9. Cellule de batterie tout solide comprenant au moins un électrolyte polymère tel que défini à l'une quelconque des revendications 1 à 6.

10. Batterie tout solide comprenant au moins une cellule telle que définie à la revendication 9.
